# EUROPÄISCHE PATENTANMELDUNG

(11) **EP 0 650 702 A1**
(43) Veröffentlichungstag der Anmeldung: **03.05.1995**
(21) Anmeldenummer: 93116811.6
(22) Anmeldetag: 18.10.1993
(51) Int. Cl.: A61C 13/20

(54) **Verfahren zum Dokumentieren der Herstellung eines Dentalgussobjekts**

(71) Anmelder: THOMSEN, Peter Karl, D-24113 Molfsee/Schulensee (DE)
(72) Erfinder: THOMSEN, Peter Karl, D-24113 Molfsee/Schulensee (DE)
(74) Vertreter: Glawe, Delfs, Moll & Partner

(57) **Zusammenfassung**

Ein Verfahren zum Dokumentieren der Lage eines Dentalgußmodells (3) bezüglich der Formoberfläche zeichnet sich dadurch aus, daß die Lage des Modells an dem Trichterformer (6) vor dem Einbetten bildlich festgehalten wird. Dies geschieht zweckmäßigerweise unter gleichzeitiger bildlicher Fixierung einer Marke (11), die die Lage der Oberfläche einer zugeordneten Form im Verhältnis zum Gußobjekt bzw. zum Trichterformer wiedergibt. Dies kann eine Marke sein, die mit dem Trichterformer körperlich verbunden ist. Sie kann aber auch in der Aufnahmeapparatur enthalten oder in der Auswerteeinheit der Aufnahmeapparatur gespeichert sein. Bei Verwendung unterschiedlicher Größen kann die Zuordnung der jeweils zutreffenden Marke zu dem Trichterformer vorbestimmter Größe selbsttätig erfolgen. Statt der Verwendung einer solchen Marke ist es auch möglich, zusätzlich die Form nach dem Einbetten bildlich festzuhalten, um durch Vergleich der Aufnahmen vor und nach dem Einbetten die Lage des Objekts und die Lage der Formoberflächen miteinander in Beziehung setzen zu können. Stattdessen ist es auch möglich, das Modell in der tatsächlich verwendeten Muffelformschale bzw. das Modell oder den Formhohlraum der fertigen Muffel zu dokumentieren.

## Beschreibung

Für Fehler an Dentalprothesen, die in Metallgußtechnik hergestellt sind, wird meist - nicht immer zu recht - der Zahntechniker verantwortlich gemacht. Eigenes Interesse - daneben aber auch eine sich abzeichnende gesetzliche Pflicht - gebieten ihm weitestmögliche Dokumentation des Herstellungsgangs einschließlich der Befolgung der Verarbeitungsrichtlinien, die ihm vom Hersteller der verwendeten Gußlegierung vorgegeben sind. Eine besonders wichtige Rolle spielt dabei die vorschriftsmäßige Anordnung der Gußmodelle in der verlorenen Gußform, da eine fehlerhafte Anordnung zu Porosität und Lunkerbildung führen kann (Informationsschrift "der paßgenaue Dentalguß" der Firma Heraeus Edelmetalle GmbH, Hanau).

Zur Herstellung der Gußform wird zunächst ein Wachsmodell des zu gießenden Gegenstands und der zugehörigen Grußkanäle hergestellt und kopfunten auf einem als Sockel dienenden Modell des Eingußtrichters befestigt. Dieser wird im folgenden einfach als Trichterformer bezeichnet. Das so hergestellte Modell wird anschließend in eine Formmasse eingebettet, die man erhärten läßt, nach Abnahme des Trichterformers aufheizt, wobei die Modellmasse verbrennt, und schließlich im Schleuderguß oder Vakuum-Druckguß-Verfahren mit dem geschmolzenen Metall füllt. Für die Qualität des Gußobjekts ist seine Lage im Verhältnis zur Außenfläche der Form wichtig, zu der hin die Schmelzwärme abgeführt wird. Liegt das Gußobjekt im Verhältnis zu anderen Teilen des Gusses oder zu anderen Gußobjekten in derselben Form nicht nahe genug an der Formoberfläche, so kann es geschehen, daß es teilweise erst nach anderen Gußteilen erstarrt und sich dabei Lunker bilden. Die Form hat in der Regel keine beliebige Außengestalt; vielmehr wird die Außengestalt der Form beim Einbetten des Modells in die die Form bildende Masse vorgegeben durch sogenannte Grußringe oder Muffelformer oder einfach Papiermanschetten, die auf die als Sockel dienenden Trichterformer aufgesetzt werden und im folgenden zusammenfassend als Muffelformschale bezeichnet werden. Es sind einige wenige Typen und Größen von Muffelformschalen im Gebrauch, die im wesentlichen gleiche Höhe und gestufte Durchmesser besitzen. So gibt es von einem führenden Hersteller Muffelformschalen mit vier verschiedenen Innendurchmessern und gleicher Höhe, von einem anderen Hersteller drei Größen. Jeder Größe ist ein dazu passender Trichterformer zugeordnet, auf den die zugehörige Muffelformschale passend aufgesetzt werden kann. Der Zahntechniker wählt daher bei der Anfertigung des Modells den als Sockel verwendeten Trichterformer gemäß der erforderlichen Größe der Muffelformschale und hat beim Aufbau des Wachsmodells auf den Trichterformer die Außengestalt der sich später ergebenden Form im Auge, um den richtigen Außenflächenabstand seines Gußobjekts vorherzubestimmen. Dabei kann ihm eine lediglich beim Aufbau des Modells verwendete Muffelform-Halbschale hilfreich sein, die er auf den als Sockel verwendeten Trichterformer aufsetzen kann, um daran die Höhe des Modells (im Hinblick auf den späteren Abstand des Objekts von der Bodenfläche der Form) und den Umfangsabstand kontrollieren zu können.

Die Erfindung schlägt vor, diesen Zustand des Gußmodells vor dem Einbetten bildlich so zu dokumentieren, daß daraus die Lage des Modells im Verhältnis zur Oberfläche der Form unmittelbar oder mittelbar entnommen werden kann. Dies kann dadurch geschehen, daß mit dem Modell eine Marke abgebildet wird, die die Lage der Form wiedergibt. Wenn der Trichterformer Rückschlüsse zuläßt auf die Größe und Lage der Muffelformschale genügt auch die Dokumentation des Trichterformers, mit dem Modell, weil die Relativlage des Modells zu dem Trichterformer Rückschlüsse zuläßt auf die Lage des Modells in der späteren Gußform. Beispielsweise können das Modell und der Trichterformer auf einer und derselben fotografischen Aufnahme abgebildet werden. Wenn ein Trichterformer verwendet wird, der mit Muffelformschalen unterschiedlicher Größer kombinierbar ist oder bei dem die Muffelformschale in unterschiedlichen Maß mit Formmasse befüllbar ist, kann auch die Form nach dem Einbetten (zweckmäßigerweise vor den Abnehmen des Gußtrichterformers) bildlich festgehalten werden. Der Vergleich der Abbildungen des Modells vor dem Einbetten und der Form nach dem Einbetten erlaubt dann einen Rückschluß über die gegenseitige Relativlage. Bei Verwendung eines Gußtrichterformers, der mit Muffelformschalen unterschiedlicher Größe kombinierbar ist, kann nach der Erfindung am Trichterformer eine Einrichtung zur Bestimmung der Größe der vorgesehenen Muffelformschale angebracht und diese mit dem Modell bildlich festgehalten werden. Auf das gewählte Verfahren zur bildlichen Dokumentation kommt es in diesem Zusammenhang nicht an. Mit bekannten Apparaturen leicht herstellbar und später leicht auswertbar sind Fotografien, die das Objekt zweckmäßigerweise aus unterschiedlichen Blickrichtungen (beispielsweise aus der Richtung der drei Hauptachsen) zeigen. Fotografische Darstellungen können auch papierlos mit den Mitteln der elektronischen Datenverarbeitung gespeichert werden. Zur Verringerung des erforderlichen Speicherplatzes kann es auch zweckmäßig sein, eine Abtast- und Darstellungsart zu wählen, bei der lediglich die Umrisse des Modells und ggf. des Trichterformers festgehalten werden.

Einschlägige Abtast- und Darstellungsmittel sind bekannt. In jedem Falle kann der Trichterformer mit abgebildet werden zur Feststellung der Höhenlage des Modells im Verhältnis zum Trichterformer bzw. zur Muffelformschale und zur Form. Wenn aber nach einem Merkmal der Erfindung die Aufnahmeapparatur Einrichtungen zur eindeutigen Positionierung des Trichterformers im Verhältnis zur Aufnahmeoptik enthält, genügt es ggf., lediglich das Objekt darzustellen und gleichzeitig in geeigneter Form eine die Lage des Trichterformers direkt oder indirekt angegebene Marke oder Zahlenangabe vorzusehen.

Da es im Hinblick auf den Endzweck der Darstellung weniger auf die Relativlage des Modells zum Trichterformer als vielmehr auf die Relativlage zu der zu erwartenden Außenbegrenzung der Form ankommt, wird eine Marke bevorzugt, die direkt oder indirekt einen Rückschluß auf die Lage der Formoberfläche erlaubt. Eine solche Marke wird beispielsweise von der oben erwähnten Muffelform-Halbschale zur Verfügung gestellt, die in ordnungsgemäßer Lage an dem Trichterformer angesetzt, als Marke mit dem Modell abgebildet werden kann. Sie gibt die Lage des Außenumfangs der Form an. Die Höhe, bis zu der sie gefüllt werden darf, kann auf der Darstellung sichtbar an ihr angegeben werden.

Wenn - wie bereits oben als Möglichkeit erwähnt - die Aufnahmeapparatur mit einer Einrichtung versehen ist, die dem Trichterformer eine vorbestimmte Lage im Verhältnis zur Aufnahmeoptik verleiht, braucht die Marke nicht körperlich am Modell vorgesehen zu sein; vielmehr kann sie auch Teil der Aufnahmeeinrichtung oder des Wiedergabematerials sein. Beispielsweise können auf dem Papier, das den Abdruck der gewonnenen Darstellung aufnimmt, die Formgrenzen für die in Frage kommenden Größen der Muffelformschalen vorgedruckt sein, wobei die Art und Größe des in der Aufnahme erscheinenden Trichterformers einen Rückschluß darauf zuläßt, welcher der jeweils vorgedruckten Grenzen für die jeweilige Darstellung maßgebend ist. Die Marke kann aber auch mit elektronischen oder anderen Mitteln in der Aufnahmeapparatur unmittelbar erzeugt und mit der gewonnenen Darstellung gespeichert werden. Da die Lage dieser zu erzeugenden Marke abhängig ist von der zu verwendenen Muffelformschale, kann diese bei Aufnahmevorgang manuell eingegeben werden oder besser unmittelbar von der Aufnahmevorrichtung durch Abtastung des Trichterformers ermittelt werden.

Wenn vorgesehen ist, daß sowohl das Modell vor dem Einbetten als auch die Form nach dem Einbetten dokumentiert werden, werden die beiden Abbildungen zweckmäßigerweise übereinander gespeichert, so daß ein unmittelbarer Vergleich der Lage des Modells mit den Formbegrenzungen möglich ist.

Wenn Aufnahmen aus unterschiedlichen Blickrichtungen gemacht werden sollen, kann die Aufnahmevorrichtung mit Spiegeln ausgerüstet sein, die so angeordnet sind, daß die verschiedenen Blickrichtungen gleichzeitig für das eine, feststehende Aufnahmeobjektiv in einer Darstellung aufnehmbar sind. Stattdessen können auch mehrere Objektive oder eine Beweglichkeit des Objektivs in unterschiedliche Blickpositionen vorgesehen sein.

Nach einer weiteren Ausführungsform der Erfindung kann das Modell in der Muffelformschale zur Dokumentation abgebildet werden. Zu diesem Zweck kann für die Muffelformschale ein Material gewählt werden, daß für die abbildende Strahlungsart durchlässig ist. Wenn sichtbare Strahlung verwendet wird, wird sie beispielsweise aus Glas oder durchsichtigem Kunststoff gebildet. Wenn Sie nicht durchsichtig ist, wird eine sie durchdringende Strahlungsart (beispielsweise Alpha-, Beta- oder Gammastrahlung) verwendet. Auf diese Weise läßt sich nicht nur eine Draufsichtdarstellung gewinnen, die ohnehin nicht von der Muffelformschale behindet wird, sondern auch eine Seitenansicht. Stattdessen ist es in vielen Fällen auch ausreichend, außer einer Draufsicht eine Ansicht schräg von oben durch die Füllöffnung der Muffelformschale - ggf. aus unterschiedlichen Richtungen - herzustellen und daraus im Bedarfsfall die Lage des Modells im Verhältnis zur Muffelformschale zu rekonstruieren.

Schließlich ist es im Rahmen der Erfindung auch möglich, die Lage des Modells oder des Formhohlraums oder des Gußobjekts in der fertigen Muffel bzw. Form durch geeignete Strahlung (einschließlich Schallwellen) festzustellen.

Die Dokumentation der Lage des Modells, Formhohlraums oder Gußobjekts in der tatsächlich zu verwendenden Muffelformschale bzw. in der fertigen Form vermeidet die Unsicherheit bezüglich der tatsächlich verwendeten Formgröße, wenn im Zusammenhang mit dem verwendeten Trichterformer unterschiedlich große Muffelformschalen benutzt werden können.

Die Erfindung wird im folgenden näher unter Bezugnahme auf das in der Zeichnung schematisch veranschaulichte Ausführungsbeispiel beschrieben. Darin zeigen:
- Fig. 1: eine Seitenansicht eines Modells, eingebettet in eine geschnitten dargestellte Form,
- Fig. 2, 3 und 4: zwei Seitenansichten und eine Draufsicht auf ein noch nicht eingebettetes Modell,
- Fig. 5: die Seitenansicht eines Modells vor einem mit Marken versehenen Schirm in der Positioniereinrichtung einer Aufnahmevorrichtung,
- Fig. 6: die schematische Darstellung einer mit Spiegel versehenen Aufnahmevorrichtung und
- Fig. 7: das Beispiel einer gespeicherten Darstellung.

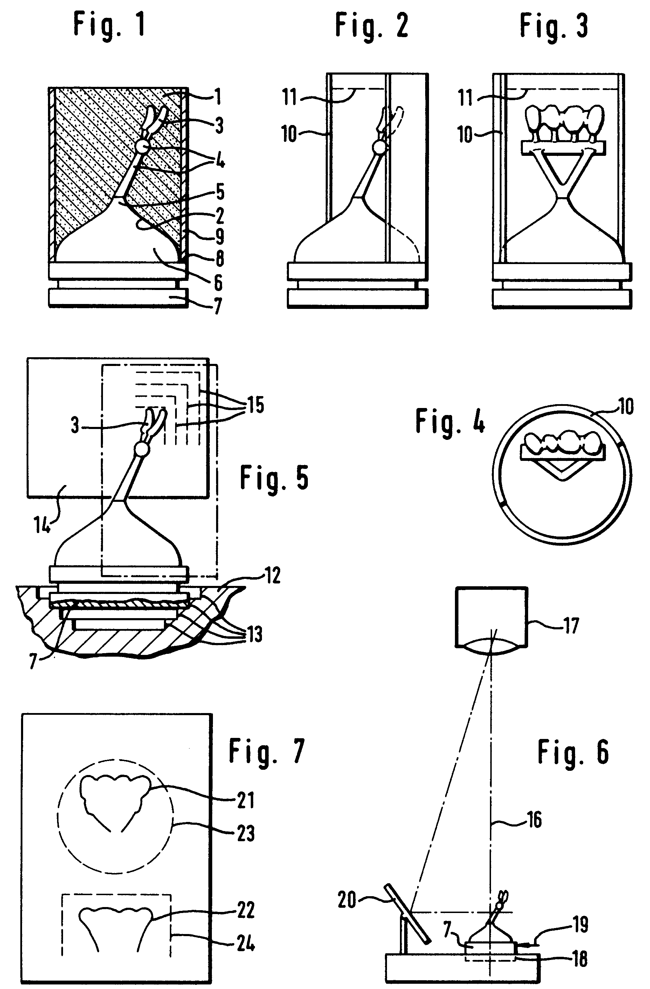

Nimmt man den gepunkteten Teil der Darstellung in Fig. 1 und dreht ihn um 180°, so erhält man die Darstellung einer Form 1 mit oberseitigem Eingußtrichter 2, in den das geschmolzene Metall zur Füllung des Formhohlraums 3 gegeben wird.

Zur Herstellung dieser Form wird das Wachsmodell 3 (dieselbe Bezugsziffer wie der Formhohlraum in Fig. 1) mit den Modellen 4 der zugehörigen Gußkanäle auf der Spitze 5 des Trichterformers 6 aufgebaut, der den Eingußtrichter 2 bildet und nach unten in einen Sockel 7 übergeht, der in unterschiedlicher, geeigneter Weise gestaltet sein kann, um beispielsweise mit Halte-, Greif- oder Positionierwerkzeugen zusammenzuwirken. Der Trichterformer 6 und der Sockel 7 sind einstückig beispielsweise aus Kunststoffmaterial geformt, das als verlorenes Modell in der Form verbleiben kann und bei deren Ausheizen verbrannt wird oder wiederholt verwendbar ist und deshalb vor der Verwendung der Form von dieser entfernt wird. Am Übergang vom Trichterformer 6 zum Sockel 7 befindet sich eine Stufe 8, die einen Sitz bildet für ein Rohrstück 9, das eine Formschale bildet für die Formmasse 1 und deshalb hier als Muffelformschale bezeichnet wird. Der Trichterformer 6, der Sockel 7 und die Muffelformschale 9 haben im allgemeinen die Gestalt von Rotationskörpern; jedoch ist dies nicht unbedingt erforderlich.

Beim Aufbau des Wachsmodells 3, 4 auf dem Trichterformer 6 bedient sich der Dentaltechniker der Peilschale 10, die eine halbe Muffelformschale ist und wie diese auf die Stufe 8 passend aufgesetzt werden kann. Sie gibt ihm an, wo in der fertigen Form deren Oberfläche liegt und trägt eine Marke 11, die anzeigt, welche Höhe die Form 1 haben wird. Da er weiß, daß das Gußobjekt 3 in der Form eine bestimmte Lage in bezug auf deren Oberfläche im Verhältnis zu den übrigen Modellteilen 4 haben soll, kann er das Gußmodell in bezug auf die Halbschale in geeigneter Weise ausrichten.

Fotografiert man das fertige Modell vor dem Einbetten zusammen mit der Peilschale 10, so erhält man eine genaue Dokumentation der Lage des Modells in der Form 1, wenn man voraussetzt, daß die Lage des Modells sich während des Einbettens nicht mehr verändert und daß eine der Peilschale entsprechende Muffelformschale verwendet wird. Die Fig. 2, 3 und 4 können als solche Aufnahmen aus verschiedenen Richtungen angesehen werden. Zur Identifizierung der Lage des Modells in der Form genügen zwei dieser Darstellungen, beispielsweise Fig. 4 in Verbindung mit Fig. 2 oder Fig. 3, weil daraus sowohl der Abstand der Modellteile 3 vom Kreisumfang (Fig. 4) als auch von der voraussichtlichen Unterseite der Form (Linie 11) festgestellt werden kann. Dies ist daher eine wirksame und gleichzeitig sehr einfache Form der erfindungsgemäßen Dokumentation. Wenn der Trichterformer die Verwendung unterschiedlicher Muffelformschalen gestattet, kann zusätzlich (beispielsweise durch persönlich eingegebene Notiz) die jeweils verwendete Muffelformschale dokumentiert werden.

Während bei den vorgenannten Beispielen die Peilschale 10 eine mit dem Objekt verbundene und dessen Lagebestimmung gestattende Marke bildet, kann diese Marke auch Teil der Aufnahmevorrichtung sein. Ein Beispiel zeigt Fig. 5. Die Aufnahmevorrichtung weist eine Halterung 12 für den Sockel 7 auf, die so gestaltet ist, daß Sockel 7 von vier unterschiedlichen Durchmessern auf den Stufen 13 in Ausnehmungen entsprechend unterschiedlichen Durchmessers und unterschiedlicher Höhe zentriert gehalten werden können. Gegenüber der in der Zeichnung nicht erscheinenden Optik der Aufnahmeapparatur ist ein Schirm 14 angeordnet, der Marken 15 für die den Stufen 13 zugeordneten, unterschiedlichen Formdurchmesser besitzt. Auf einer fotografischen Aufnahme, die mindestens etwa die durch strichpunktierten Rahmen angegebenen Fläche erfaßt, erkennt man von dem Sockel bzw. dem Trichterformer soviel, daß der Durchmesser identifiziert und mit der zugehörigen Marke 15 in Verbindung gebracht werden kann. Ferner erscheint auf der Aufnahme das Gußmodell 3, dessen Lage gegenüber der zugehörigen Marke bestimmt werden kann, woraus sich die entsprechenden Rückschlüsse auf die Lage in der Form ziehen lassen. Die Aufnahme läßt soviel von dem Modell erkennen, daß ggf. auf eine Draufsicht entsprechend Fig. 4 verzichtet werden kann.

Will man auf eine solche Draufsicht nicht verzichten, so bietet sich das Schema der Aufnahmeapparatur gem. Fig. 6 an. Die optische Achse 16 der Optik 17 stimmt überein mit der Längsachse der Aufnahmeeinrichtung 18 für den Sockel 7. Die Aufnahmeeinrichtung 18 ist zentrierend ausgebildet und gestattet die Feststellung des Durchmessers des Sockels 7 oder anderer identifizierender Eigenschaften des Sockels 7 mittels einer durch Pfeil schematisch angedeuteten Abtasteinrichtung 19. Im einfachsten Fall ist diese Abtasteinrichtung so ausgebildet, wie dies durch die Stufen 13 in Fig. 5 veranschaulicht wurde. Seitlich neben dem abzubildenden Objekt befindet sich ein Spiegel 20, der ebenso wie das Objekt selbst im Abbildungsbereich der Optik 17 liegt und der so ausgerichtet ist, daß die Abbildung neben der unmittelbar gewonnenen Draufsicht auf dem Wege über den Spiegel 20 auch eine Seitenansicht umfaßt. Wie im Beispiel der Fig. 5 kann ein (nicht dargestellter) Schirm zur Bildung der Vergleichsmarke zur Feststellung der Position des Modells vorgesehen sein. Stattdessen kann die Auswerteeinrichtung, die der Optik 17 nachgeschaltet ist, auch so ausgestattet sein, daß in der Abbildung selbsttätig eine Marke erzeugt wird, die in der Auswerteeinheit für jede Sockelgröße gespeichert ist. Die Abtasteinrichtung 19 gibt der Auswerteeinheit an, welche Marke jeweils zu verwenden ist.

Die Darstellung kann eine vollständig Fotografie sein. Sie kann aber auch zur Abkürzung des Verfahrens und zur Verminderung des Speicherbedarfs auf die Umrißwiedergabe beschränkt sein, wie dies in Fig. 7 angedeutet ist, wo die Linie 21 und 22 den Draufsicht- bzw. Seitenansichtumriß des Modells und die gestrichelten Linien 23 und 24 als Marke den zugehörigen Formumriß angeben.

In den obigen Beispielen wurde vorausgesetzt, daß bereits der Durchmesser des Sockels 7 des Trichterformers zur Bestimmung von Art und Größe des Trichterformers und der damit zu verwendenden Muffelformschale ausreicht. Wenn unterschiedliche Fabrikate von Trichterformern verwendet werden, kann es darüber hinaus erforderlich sein, auch unterschiedliche Arten von Trichterformern und zugehörigen Muffelformschalen zu identifizieren. Dazu können selbstverständlich andere Formeigenschaften herangezogen werden als der Durchmesser, beispielsweise jeweils nur zu einer Größe der Muffelformschale passende Vorsprünge bzw. Ausnehmungen an dem Trichterformer und an der Muffelformschale, wobei die am Trichterformer vorgesehenen in der bildlichen Darstellung sichtbar werden oder abgetastet und dann zusammen mit der Darstellung aufgezeichnet werden. Schließlich ist auch denkbar, daß in Verbindung mit einem Trichterformer bestimmten Durchmessers unterschiedlich hohe Muffelformschalen verwendet werden können; der Trichterformer kann auch in diesem Zusammenhang mit in der Apparatur selbsttätig oder in der Darstellung erkennbaren Identifizierungsmerkmalen versehen sein, die mit entsprechenden Merkmalen der Muffelformschale übereinstimmen. Diese können in der Aufnahmeapparatur selbsttätig abgetastet werden oder in der Darstellung mit dem Auge identifiziert werden.

Wenn - wie oben in der Beschreibungseinleitung angegeben wurde - außer dem Modell vor dem Einbetten auch noch die Form 1 nach dem Einbetten dokumentiert wird, so kann dies durch bildliche Aufnahme mit oder ohne Trichterformer 6 bzw. Sockel 7 geschehen. Die Aufnahme mit Trichterformer bzw. Sockel kann zweckmäßig sein, um einen einfachen Maßvergleich zu ermöglichen. Jedoch gibt in der Regel auch die Form selbst hinreichende Maß-Anhaltspunkte, so daß auf den Trichterformer bzw. auf den Sockel verzichtet werden kann.

Bei denjenigen erfindungsgemäßen Verfahren, bei dem die fertige Muffel bzw. Form durchleuchtet wird, erhält man eine Seitenansicht von der Art der Fig. 1 und eine Draufsicht von der Art der Fig. 4. Es kommt in diesem Zusammenhang nicht darauf an, ob die Muffelformschale in diesem Zustand bereits entfernt ist oder nicht.

Wenn das Modell vor dem Einbetten in der zu verwendenden Muffelformschale dokumentiert wird, erhält man gleichfalls Darstellungen entsprechend Fig. 1 und Fig. 4.

## Patentansprüche

1. Verfahren zum Dokumentieren der Herstellung eines Dentalgußobjekts, die das Herstellen eines Modells des Objekts an einem Trichterformer, das Anbringen einer Muffelformschale an dem Trichterformer und das Einbetten in eine Formmasse umfaßt, wobei der Trichterformer die Lage der Muffelformschale bestimmt, dadurch gekennzeichnet, daß die Lage des Modells an dem Trichterformer vor dem Einbetten bildlich festgehalten wird und
a) mit dem Modell eine Marke bildlich festgehalten wird, die die anzunehmende spätere Lage der Oberfläche der Form oder eines wesentlichen Teils der Oberfläche der Form angibt oder
b) bei Verwendung eines Gußtrichterformers, der nur mit einer Muffelformschale bestimmter Größe kombinierbar ist, der Trichterformer bestimmt wird oder
c) bei Verwendung eines Trichterformers, der mit Muffelformschalen unterschiedlicher Größen kombinierbar ist oder mit einer oder mehreren Muffelformschalen bestimmter Größe kombinierbar ist, die in unterschiedlichem Maß mit Formmasse befüllbar sind, auch die Form nach dem Einbetten (zweckmäßigerweise vor dem Abnehmen des Trichterformers) bildlich festgehalten wird, oder
d) bei Verwendung eines Trichterformers, der mit Muffelformschalen unterschiedlicher Größe kombinierbar ist, an dem Trichterformer eine Einrichtung zur Bestimmung der Größe der Muffelformschale vorgesehen und diese mit dem Modell bildlich festgehalten wird.

2. Verfahren nach Anspruch 1, dadurch gekennzeichnet, daß die Darstellung, ggf. zusammen mit der Dokumentation anderer Herstellungsabschnitte, von Materialangabe und/oder Identifizierungsangaben, mittels eines Datenverarbeitungsgeräts gespeichert wird.

3. Verfahren zum Dokumentieren der Herstellung eines Dentalgußobjekts, das das Herstellen eines Modells des Objekts an einem Trichterformer, das Anbringen einer Muffelformschale an dem Trichterformer und das Einbetten in eine Formmasse umfaßt, dadurch gekennzeichnet, daß die Lage des Modells innerhalb der Muffelformschale vor dem Einbetten bildlich festgehalten wird.

4. Verfahren nach Anspruch 3, dadurch gekennzeichnet, daß für die Muffelformschale ein von der abbildenden Strahlung durchdringbarer Werkstoff verwendet wird.

5. Verfahren nach Anspruch 3, dadurch gekennzeichnet, daß die Abbildung des Modells aus unterschiedlichen Richtungen durch die obere Öffnung der Muffelformschale erfolgt.

6. Verfahren zum Dokumentieren der Herstellung eines Dentalgußobjekts, das die Herstellung einer Form mittels eines verlorenen Modells umfaßt, dadurch gekennzeichnet, daß die Lage des Modells oder des Formhohlraums oder des Gußobjekts innerhalb der Form mittels einer die Form durchdringenden Strahlung dokumentiert wird.

7. Vorrichtung zum Dokumentieren der Herstellung eines Dentalgußobjekts mittels des Verfahrens nach Anspruch 1 oder 2, dadurch gekennzeichnet, daß sie eine Bildaufnahmeapparatur umfaßt mit einer Einrichtung (18) zum Halten des Trichterformers in vorbestimmter Stellung zur Aufnahmeoptik (17).

8. Vorrichtung nach Anspruch 7, dadurch gekennzeichnet, daß an Trichterformern abtastbare Identifizierungseinrichtungen vorgesehen sind und die Aufnahmeapparatur mit einer Abtasteinrichtung (19) sowie Einrichtungen zum Speichern des Abtastergebnisses ausgerüstet ist.

9. Vorrichtung nach Anspruch 7 oder 8, dadurch gekennzeichnet, daß sie mit einer Einrichtung zum Erzeugen einer die Lage der Oberfläche der Form oder eines Teils derselben angegebenen Marke auf einer bildlichen Darstellung des Modells ausgerüstet ist.

10. Vorrichtung nach den Ansprüche 8 und 9, dadurch gekennzeichnet, daß die Aufnahmeapparatur mit Einrichtungen zum selbsttätigen Einstellen der Marke abhängig von der Art bzw. Größe des Trichterformers ausgerüstet ist.

11. Vorrichtung zum Dokumentieren der Herstellung eines Dentalgußobjekts mittels des Verfahren nach Anspruch 1 oder 2 oder Vorrichtung nach einem der Ansprüche 7 bis 10, dadurch gekennzeichnet, daß die Aufnahmeapparatur Einrichtungen zum Aufnehmen aus unterschiedlichen Blickrichtungen umfaßt.

12. Vorrichtung nach Anspruch 11, dadurch gekennzeichnet, daß die Aufnahmeapparatur mindestens einen Spiegel (20) zum gleichzeitigen Aufnehmen aus unterschiedlichen Blickrichtungen aufweist.

13. Vorrichtung nach Anspruch 11, dadurch gekennzeichnet, daß die Aufnahmeapparatur mehrere Objekte mit unterschiedlichen Blickrichtungen aufweist.

14. Vorrichtung nach Anspruch 11, dadurch gekennzeichnet, daß ein Objektiv der Aufnahmeapparatur in unterschiedlichen Blickrichtungen einstellbar ist.
